# EUROPÄISCHE PATENTSCHRIFT

(11) **EP 0 584 463 B1**
(45) Veröffentlichungstag und Bekanntmachung des Hinweises auf die Patenterteilung: **26.03.1997**
(21) Anmeldenummer: 93108154.1
(22) Anmeldetag: 19.05.1993
(51) Int. Cl.: A01C 15/00

(54) **Sämaschinenkombination**
Seed drill and conveying apparatus
Semoir combiné

(30) Priorität: 06.08.1992 DE 9210354 U
(43) Veröffentlichungstag der Anmeldung: 02.03.1994
(73) Patentinhaber: Rabewerk GmbH + Co., 49152 Bad Essen (DE)
(72) Erfinder: Gerdom, Friedrich, Dipl.-Ing., W-4515 Bad Essen (DE)
(74) Vertreter: Missling, Arne, Dipl.-Ing.

(56) Entgegenhaltungen:
- DE-U- 8 410 751
- DE-U- 8 809 701
- GB-A- 1 257 911
- US-A- 4 503 803

## Beschreibung

Die Erfindung bezieht sich auf eine Sämaschinenkombination mit einer an einem Schlepper ankoppelbaren Sämaschine, welche einen Saatgutbehälter umfaßt, sowie mit einem Transportfahrzeug für Saatgut, welches mit einer Fördereinrichtung versehen ist.

Bei der Bestellung eines Feldes ist es erforderlich, den Saatgutbehälter mehrfach nachzufüllen, da insbesondere bei großen Feldern das Fassungsvolumen des Saatgutbehälters nicht ausreichend groß gestaltet werden kann. Eine Gewichtsbegrenzung ergibt sich insbesondere deshalb, weil das Gewicht des Saatgutbehälters auf der Straße oder im Vorgewende von dem Schlepper getragen werden muß. Weiterhin ergeben sich auch während des normalen Betriebes Probleme, wenn die Sämaschine ein hohes Gewicht, bedingt durch einen groß dimensionierten Saatgutbehälter aufweist.

Aus dem Stand der Technik ist es bekannt, das Saatgut in Säcke zu füllen und diese Säcke einzeln von Hand in den Saatgutbehälter zu entleeren. Diese Vorgehensweise ist unökonomisch, da das zunächst lose vorliegende Saatgut zunächst in Säcke verpackt und anschließend aus diesen wieder entleert wird. Ein weiterer Nachteil besteht auch darin, daß der Transport der Saatgut-Säcke, welche mit einem Wagen auf das Feld transportiert werden, zu dem Saatgutbehälter aufwendig ist und die jeweilige Bedienungsperson stark belastet. Um diese Belastung etwas zu vermindern, ist aus der DE-OS 30 00 959 eine Drillmaschine bekannt, bei welcher ein Laufsteg verwendet wird, auf welchem die Säcke mittels eines Sackkarrens transportiert werden können. Es ergibt sich, daß hierdurch zwar die Belastung der Bedienungsperson gesenkt werden kann, eine rationelle Befüllung des Saatgutbehälters ist jedoch auch mit dieser Ausgestaltung nicht gewährleistet.

Weitere Lösungsmöglichkeiten der oben beschriebenen Problematik sehen vor, vorne an dem Schlepper einen relativ großen Behälter für das Saatgut anzubringen und dieses mittels einer Fördereinrichtung in den eigentlichen Saatgutbehälter zu überführen, der dann nur noch als relativ kleiner Zwischenbehälter ausgebildet zu sein braucht. Diese Ausgestaltung führt jedoch ebenfalls zu einer gewichtsmäßigen Begrenzung des vorne am Schlepper angebrachten Behälters und löst nicht die Problematik der Befüllung dieses Behälters.

Der Stand der Technik zeigt weiterhin Transportfahrzeuge, in welchen das Saatgut als loses Schüttgut eingefüllt ist. Ein derartiges Transportfahrzeug kann mit einer Förderschnecke versehen sein, welche über den Hydraulikkreis des Transportfahrzeuges angetrieben wird. Eine derartige Vorrichtung ist beispielsweise aus der DE-U-84 10 751 bekannt. Die Bedienungsperson muß somit das Transportfahrzeug an die Sämaschine fahren, oder umgekehrt. Die Bedienungsperson muß von dem Schlepper absteigen und die Fördereinrichtung des Transportfahrzeuges in Gang setzen, damit über dessen Hydraulikanlage die Förderschnecke betrieben wird. Nach Beendigung des Befüllens des Saatgutbehälters sind diese Bedienungsschritte wieder in umgekehrter Reihenfolge durchzuführen. Daraus ergibt sich, daß die gesamte Vorgehensweise ausgesprochen umständlich und unpraktikabel ist.

Die US-A-4 503 803 beschreibt eine Sämaschine mit einer hydraulischen Anlage, die mit einem Hydraulikmotor einer Saatgut-Fördereinrichtung verbunden ist. In den Verbindungsschläuchen sind üblicherweise Rückschlagventile angeordnet, die ein Ausfließen von Hydraulikflüssigkeit verhindern.

Der Erfindung liegt die Aufgabe zugrunde, eine Sämaschinenkombination der eingangs genannten Art zu schaffen, welche bei einfachem Aufbau und betriebssicherer Anwendbarkeit eine einfache Befüllung des Saatgutbehälters ermöglicht.

Erfindungsgemäß wird die Aufgabe dadurch gelöst, daß die Fördereinrichtung wahlweise über einen Hydraulikkreis der Sämaschine, der mit der hydraulischen Anlage des Schleppers der Sämaschine verbindbar ist, bzw. über einen Hydraulikkreis des Transportfahrzeuges antreibbar ist.

Die erfindungsgemäße Sämaschinenkombination zeichnet sich durch eine Reihe erheblicher Vorteile aus. Die Fördereinrichtung kann in konventioneller Weise über das Transportfahrzeug, beispielsweise über den Hydraulikkreis eines mit einem Anhänger verbundenen Schleppers betätigt werden. Wenn die Sämaschine an das Transportfahrzeug herangefahren wird, schafft die vorliegende Erfindung die Möglichkeit, daß die Bedienungsperson die Fördereinrichtung des Transportfahrzeuges mittels des Hydraulikkreises des Schleppers in Betrieb nimmt. Es ist somit möglich, das Transportfahrzeug mit dessen Fördereinrichtung stationär aufzustellen, beispielsweise am Rand eines Feldes. Falls erforderlich, kann der Schlepperfahrer mit der Sämaschine an die Fördereinrichtung heranfahren und, ohne daß er den Schlepper abstellt und den Motor des zweiten Fahrzeuges in Gang setzt oder die Schlepper-Sämaschinenkombination verläßt, mittels des Schlepper-Hydraulikkreises die Fördereinrichtung in Betrieb setzen und den Saatgutbehälter befüllen.

Erfindungsgemäß ist es besonders günstig, wenn ein an dem Schlepper angeordnetes Schlepperventil mit einem an der Sämaschine vorgesehenen Überdruckventil in Verbindung steht und dem Überdruckventil ein manuell im Bereich des Saatgutbehälter betätigbares Schaltventil nachgeordnet ist, welches mit einem Hydraulikmotor der Fördereinrichtung verbindbar ist. Üblicherweise weist ein Schlepper mehrere getrennte Anschlüsse für externe Arbeitszylinder auf. Anschlüsse führen zum Beispiel zur Fronthydraulik, welche einen Frontpacker tragen kann, oder dienen zur Betätigung von anderen Frontgeräten. Weitere Anschlüsse sind beispielsweise für den rechten und den linken Spurreißer erforderlich. Diese Hydraulikanschlüsse dienen, wie aus dem Stand der Technik bekannt, zum vollständigen Ausheben der Spurreißer. Ein weiteres Anschlußpaar der Hydraulikanlage kann zur Verstellung des Schardruckes dienen, es kann wahlweise auch eine Saatmengen-Fernverstellung betrieben werden, so daß während der Fahrt die ausgebrachte Saatgutmenge korrigiert werden kann. Daraus ergibt sich, daß eine relativ große Anzahl an hydraulischen Anschlüssen der Schlepperhydraulik vorhanden sind. Da insbesondere die letztgenannten Funktionen beim Füllvorgang nicht benötigt werden, können diese erfindungsgemäß zum Anschluß der Fördereinrichtung dienen. Somit benötigt die erfindungsgemäße Kombination keine zusätzlichen Umrüstungen der Schlepperhydraulik, vielmehr können die bereits vorhandenen Anschlüsse in einfachster Weise verwendet werden.

Erfindungsgemäß ist die Vorgehensweise bei der Befüllung des Saatgutbehälters wie folgt: Wenn der Saatgutbehälter befüllt werden soll, betätigt der Fahrer des Schleppers zunächst das Schlepperventil. Während der Fahrer den Schlepper verläßt, an das Schaltpult der Sämaschine geht und die Anschlußschläuche anbringt, spricht das auf einen geringeren Druck als den Maximaldruck der Schlepperhydraulik eingestellte Überdruckventil an. Dann kann der Fahrer das manuell betätigbare Schaltventil der Sämaschine betätigen, um auf diese Weise den Hydraulikmotor der Fördereinrichtung in Betrieb zu setzen. Der Fahrer kann daraufhin den Füllvorgang überwachen und bei Erreichen der benötigten Füllmenge das manuelle Schaltventil wieder abschalten. Dies führt wiederum zu einem Ansprechen des Überdruckventiles und gibt dem Fahrer die Möglichkeit, die Anschlußschläuche zu trennen, zum Schlepper zurückzukehren und das Schlepperventil zu betätigen.

Die Erfindung bezieht sich nicht nur auf eine Sämaschinenkombination der beschriebenen Art, sondern auch auf eine Sämaschine, wie sie durch Anspruch 6 definiert wird.

Im folgenden wird die Erfindung anhand eines Ausführungsbeispieles in Verbindung mit der Zeichnung beschrieben. Dabei zeigt:
- Fig. 1: eine schematische Seitenansicht der erfindungsgemäßen Sämaschinenkombination, und
- Fig. 2: eine vereinfachte Darstellung des in der Kombination gemäß Fig. 1 verwendeten Hydraulikkreises.

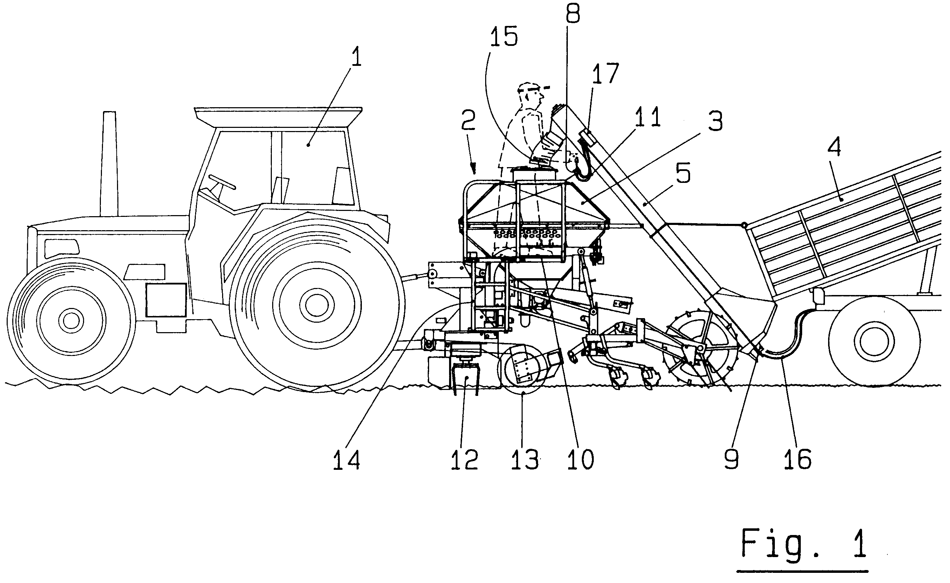

Die Fig. 1 zeigt in schematischer Weise eine Kombination eines Schleppers 1, an welchen eine Bodenbearbeitungsmaschine 12 angebaut ist. Diese ist in Form einer Kreiselegge ausgebildet, welcher eine Walze 13 nachgeordnet ist. An der Bodenbearbeitungsmaschine ist eine Sämaschine 2 gelagert, welche in nicht dargestellter Weise mit dem Hydraulikkreis des Schleppers 1 verbunden ist. Die Sämaschine 2 ist so aufgebaut, wie dies aus dem Stand der Technik bekannt ist, so daß auf eine detaillierte Beschreibung verzichtet werden kann.

Die Sämaschine 2 ist mit einer Plattform 10 versehen, welche über eine Leiter 14 bestiegen werden kann. Die Plattform 10 ist so angeordnet, daß die Bedienungsperson den Einfüllbereich eines Saatgutbehälters 3 überblicken kann und Saatgut über einen flexiblen Schlauch 15 in den Saatgutbehälter 3 einleiten kann, welches mittels einer Fördereinrichtung 5 von einem Transportfahrzeug 4 zugeführt wird.

Die Fördereinrichtung 5 ist an dem hinteren Ende des Transportfahrzeuges 4 angebaut und in Form einer Förderschnecke ausgebildet. Die Fördereinrichtung 5 braucht somit im einzelnen nicht beschrieben werden, da sie dem Stand der Technik entspricht. An dem unteren Endbereich der Fördereinrichtung 5 ist ein Hydraulikmotor 9 angeordnet, welcher über eine Schlauchleitung 16 an den Hydraulikkreis des Transportfahrzeuges 4 angeschlossen ist. Dieser Anschluß ist bei Bedarf trennbar bzw. sperrbar.

Am oberen Endbereich weist die Fördereinrichtung 5 eine Anschlußstelle 17 auf, an welche obere Anschlußschläuche 11 der Sämaschine 2 anschließbar sind. Diese Anschlußschläuche 11 sind wiederum mit einem manuell betätigbaren Schaltventil 8 gekoppelt, welches im Bereich der Plattform 10 angebracht ist. Wie bereits beschrieben, kann die Bedienungsperson durch Betätigung des Schaltventiles 8 Hydraulikmittel von dem Hydraulikkreis des Schleppers 1 bzw. der Sämaschine 2 der Fördereinrichtung 5 zuleiten, um den Hydraulikmotor 9 in Betrieb zu setzen.

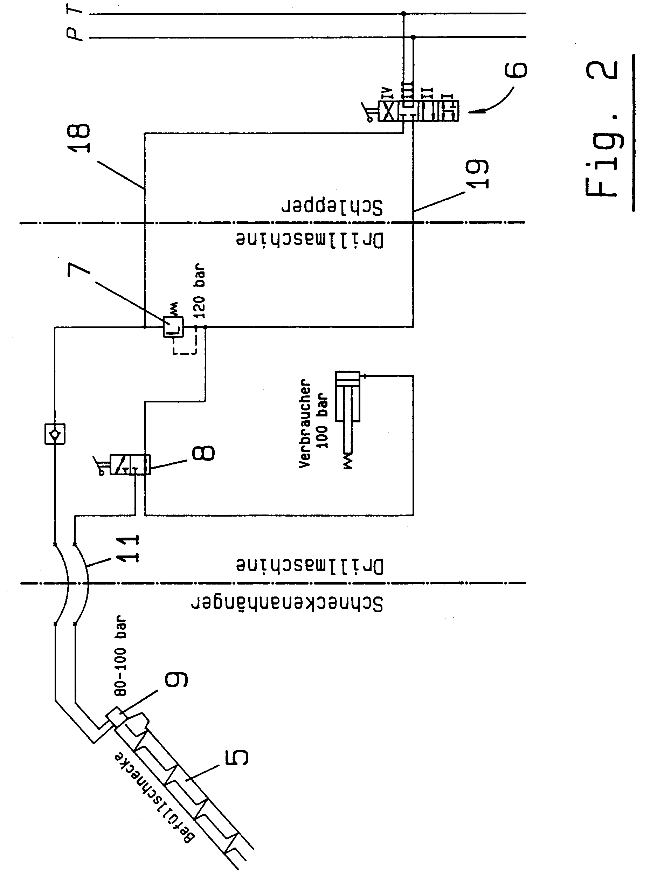

Die Fig. 2 zeigt den schematischen Aufbau des in Fig. 1 gezeigten Hydraulikkreises. In der rechten Bildhälfte der Fig. 2 ist ein Teil der hydraulischen Anlage des Schleppers 1 dargestellt, diese umfaßt ein Schlepperventil 6, durch dessen Betätigung Hydraulikfluid zu Anschlußleitungen 18, 19 geleitet werden kann, welche mit dem Hydraulikkreis der Sä- oder Drillmaschine 2 verbunden sind. Zwischen den Leitungen 18 und 19 ist ein Überdruckventil 7 zwischengeschaltet. Der Hydraulikkreis der Sämaschine 2 umfaßt das bereits beschriebene Schaltventil 8, welches manuell betätigbar ist, um Hydraulikflüssigkeit über die Schläuche 11 dem Hydraulikmotor 9 zuzuleiten.

Es versteht sich, daß die Anschlußstellen zur Verbindung des Hydraulikkreises der Sämaschine 2 mit der Fördereinrichtung 5 nicht notwendigerweise, wie in Fig. 1 gezeigt, am oberen Bereich der Fördereinrichtung 5 vorgesehen sein müssen. Es ist auch nicht erforderlich, daß die Sämaschine 2 zur manuellen Überwachung des Füllvorganges mit einer Plattform ausgerüstet ist, vielmehr kann auch ein Füllstandssensor vorgesehen sein, so daß die Bedienungsperson den Füllvorgang vom Boden aus überwachen kann.

## Patentansprüche

1. Sämaschinenkombination, mit einer an einen Schlepper (1) ankoppelbaren Sämaschine (2), welche einen Saatgutbehälter (3) umfaßt, sowie mit einem Transportfahrzeug (4) für Saatgut, welches mit einer Fördereinrichtung (5) versehen ist, dadurch gekennzeichnet, daß die Fördereinrichtung (5) wahlweise über einen Hydraulikkreis der Sämaschine (2), der mit der hydraulischen Anlage des Schleppers der Sämaschine verbindbar ist, bzw. über einen Hydraulikkreis des Transportfahrzeuges antreibbar ist.

2. Kombination nach Anspruch 1, dadurch gekennzeichnet, daß ein an dem Schlepper (1) angeordnetes Schlepperventil (6) mit einem an der Sämaschine (2) vorgesehenen Überdruckventil (7) in Verbindung steht, und daß dem Überdruckventil (7) ein manuell im Bereich des Saatgutbehälters (3) betätigbares Schaltventil (8) nachgeordnet ist, welches mit einem Hydraulikmotor (9) der Fördereinrichtung (5) verbindbar ist.

3. Kombination nach Anspruch 1 oder 2, dadurch gekennzeichnet, daß das Schaltventil (8) im Bereich einer oberen Plattform (10) der Sämaschine (2) angeordnet ist.

4. Kombination nach einem der Ansprüche 1 bis 3, dadurch gekennzeichnet, daß die Fördereinrichtung (5) in Form einer Förderschnecke ausgebildet ist.

5. Kombination nach einem der Ansprüche 1 bis 4, dadurch gekennzeichnet, daß die Fördereinrichtung (5) mit oberen Anschlußschläuchen (11) verbindbar ist, welche an den Hydraulikkreis des Sämaschine (2) angeschlossen sind.

6. Sämaschine mit einer hydraulischen Anlage, insbesondere zur Verwendung in der Sämaschinenkombination nach einem der Ansprüche 1 bis 5, gekennzeichnet durch ein mit der hydraulischen Anlage verbundenes, manuell betätigbares Schaltventil (8) und Anschlüsse (11) zur Verbindung des Schaltventiles (8) mit einem Hydraulikmotor (9) einer Saatgut-Fördereinrichtung (5), wobei das Schaltventil (8) bei Bedarf auch nach Herstellung der Verbindung mit dem Hydraulikmotor (9) der Saatgut-Fördereinrichtung (5) betätigbar ist.

## Claims

1. A sowing machine combination, having a sowing machine (2) which is couplable to a tractor (1) and comprises a seed container (3), and having a seed transporting vehicle (4) provided with a conveying device (5), characterised in that the conveying device (5) is selectively driveable via an hydraulic circuit of the sowing machine (2), this hydraulic circuit being connectable to the hydraulic apparatus of the tractor of the sowing machine, or via an hydraulic circuit of the transporting vehicle.

2. A combination in accordance with Claim 1, characterised in that a tractor valve (6) arranged at the tractor (1) is connected to a pressure relief valve (7) provided at the sowing machine (2), and in that an on-off valve (8) manually actuatable in the region of the seed container (3) is downstream of the pressure relief valve (7) and is connectable toan hydraulic motor (9) of the conveying device (5).

3. A combination in accordance with Claim 1 or 2, characterised in that the on-off valve (8) is arranged in the region of an upper platform (10) of the sowing machine (2).

4. A combination in accordance with any one of Claims 1 to 3, characterised in that the conveying device (5) is in the form of a screw conveyor.

5. A combination in accordance with any one of Claims 1 to 4, characterised in that the conveying device (5) is connectable to upper connecting hoses (11) connected to the hydraulic circuit of the sowing machine (2).

6. A sowing machine having an hydraulic apparatus, in particular for utilisation in the sowing machine combination in accordance with any one of Claims 1 to 5, characterised by an on-off valve (8) which is connected to the hydraulic apparatus and is manually actuatable, and by connections (11) to connect the on-off valve (8) toan hydraulic motor (9) of a seed conveying device (5), the on-off valve (8) also being actuatable after connection to the hydraulic motor (9) of the seed conveying device (5) when required.

## Revendications

1. Dispositif combiné pour semoir, comportant un semoir (2) qui peut être accouplé à un tracteur (1) et qui présente un récipient à semences (3), et comportant également un véhicule de transport (4) pour la semence, qui est équipé d'un dispositif comportant un convoyeur (5),
caractérisé en ce que le dispositif comportant un convoyeur (5) peut être entraîné, au choix, soit par un circuit hydraulique du semoir (2), circuit que l'on peut relier à l'installation hydraulique du tracteur du semoir, soit par un circuit hydraulique du véhicule de transport.

2. Dispositif combiné suivant la revendication 1, caractérisée en ce qu'un distributeur (6) du tracteur, placé sur le tracteur (1), est relié à une soupape de surpression (7) prévue sur le semoir (2), et en ce qu'en aval de la soupape de surpression (7), est disposée une vanne de commutation (8), actionnable manuellement dans la zone du conteneur à semences (3) et reliable à un moteur hydraulique (9) du dispositif de convoyeur (5).

3. Dispositif combiné suivant la revendication 1 ou la revendication 2, caractérisé en ce que la vanne de commutation (8) est disposée dans la zone d'une plateforme supérieure (10) du semoir (2).

4. Dispositif combiné suivant l'une des revendications 1 à 3, caractérisé en ce que le dispositif de convoyeur (5) est réalisé sous la forme d'une vis sans fin de transport.

5. Dispositif combiné suivant l'une des revendications 1 à 4, caractérisé en ce que le dispositif de convoyeur (5) peut être relié à des flexibles de raccordement supérieurs (11), qui sont eux-mêmes raccordés au circuit hydraulique du semoir (2).

6. Semoir comportant une installation hydraulique, en particulier destinée à son utilisation dans le dispositif combiné du semoir, suivant l'une des revendications 1 à 5, caractérisé par une soupape de commutation (8), actionnable manuellement et reliée à l'installation hydraulique, et par des raccords (11) assurant la liaison de la vanne de commutation (8) avec un moteur hydraulique (9) d'un dispositif de convoyeur (5) des semences, la vanne de commutation (8) pouvant être également actionnée, en cas de besoin, après réalisation du raccordement avec le moteur hydraulique (9) du dispositif de convoyeur (5) des semences.
